# EUROPEAN PATENT APPLICATION

(11) **EP 2 879 084 A1**
(43) Date of publication of application: **03.06.2015**
(21) Application number: 13290294.1
(22) Date of filing: 29.11.2013
(51) Int. Cl.: G06Q 10/06, G06Q 30/02, G06Q 50/30

(54) **Availability watching**

(71) Applicant: Amadeus S.A.S., 06410 Biot (FR)
(72) Inventor: Magnat, Gontran, 31470 Fontenilles (FR); Vignola, Greta, 06600 Antibes (FR); Pomarede, Yann, 06902 Sophia Antipolis Cedex (FR); Sbragia, Alexandre, 06740 Chateauneuf de Grasse (FR); Arnoux-Prost, Renaud, Dallas, TX 75201 (US)
(74) Representative: Samson & Partner Patentanwälte mbB

(57) **Abstract**

Methods, systems, and computer program products for watching availability-based data maintained in an external cache. Events that change a parameter for a first plurality of travel segment-dates are compared with a standard establishing a parameter value threshold. The events are filtered to produce a filtered set of events meeting the standard. An index correlating a second plurality of travel segment-dates in a travel domain with a plurality of travel solutions in the availability-based data is referenced to determine one or more of the second plurality of travel segment-dates in the index to which the events in the filtered set are applicable. The index is referenced to determine each travel solution correlated with the one or more of the second plurality of travel segment-dates. A notification is sent to the external cache to refresh the availability-based data to reflect each travel solution correlated with the one or more of the second plurality of travel segment-dates.

## Description

### BACKGROUND

The invention is generally related to computers and computer software, and in particular to methods, systems, and computer program products for watching and monitoring availability-based data used in flight search.

Computer technology is increasingly used in the travel industry to manage and support travel reservations, as well as data associated therewith. In particular, third party reservation agents, such as travel agents, and/or customers (e.g., travelers) often utilize computer based devices or web portals to interface with a reservation system, such as a Global Distribution System (GDS), to book travel arrangements and/or travel related services for the customer. When reserving travel related services using such reservation terminals in communication with such travel reservation systems, a travel agent and/or customer may initiate a reservation session between a reservation terminal and the travel reservation system to book one or more travel inventory items corresponding to the travel related services (e.g., flights, hotels, rail transportation, dining reservations, etc.) for a customer during the reservation session.

Availability-based data used in flight search associated with the reservation process may be derived from a cache to avoid the need for real-time shopping queries and determinations. The quality of the cached availability-based data is based on a balance between the data freshness and the likelihood of the value change. The quality of the cached availability-based data degrades over time as data freshness is lost. In addition, the occurrence of events impacting flight availability contribute to a highly volatility that impacts the accuracy of the cached availability-based data.

Because computer technology is utilized to increasingly manage and support travel search, a continuing need exists in the art for improved computer-based systems, as well as methods and computer program products, for watching and monitoring availability-based data used in travel search and, in particular in flight search.

### SUMMARY

Embodiments of the invention generally comprise a method, system, and computer program product for watching availability-based data maintained in an external cache. Consistent with embodiments of the invention, a plurality of events are received that change a parameter for a first plurality of travel segment-dates. Each event is compared with a standard establishing a threshold for a value of the parameter. The events are filtered to remove each event that fails to meet the standard and to produce a filtered set of events comprising each event that meets the standard. An index correlating a second plurality of travel segment-dates in a travel domain with a plurality of travel solutions in the availability-based data is referenced to determine one or more of the second plurality of travel segment-dates in the index to which the events in the filtered set of events are applicable. The index is referenced to determine each travel solution correlated with the one or more of the second plurality of travel segment-dates. A notification is sent to the external cache to refresh the availability-based data to reflect each travel solution correlated with the one or more of the second plurality of travel segment-dates.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more computer systems, customer systems, reservation systems, and provider systems consistent with embodiments of the invention.
FIG. 2 is a block diagram of the computer system of FIG. 1.
FIG. 3 is a flowchart that illustrates a sequence of operations that may be performed by at least one processor of the computer system of FIG. 2.
FIG. 4 is an example routine in the form of a sequence diagram that may be performed by the computer system of FIG. 2.
FIG. 5 is a diagrammatic view of records in the availability postings repository in which watch flags have been added.
FIG. 6 is a diagrammatic view of an index with a link between the monitored data and the external cache content.
FIG. 7 is a flowchart that illustrates a sequence of operations that may be performed by at least one processor of the computer system of FIG. 2.
FIG. 8 is an example routine in the form of a sequence diagram that may be performed by customer system of FIG. 2.

### DETAILED DESCRIPTION

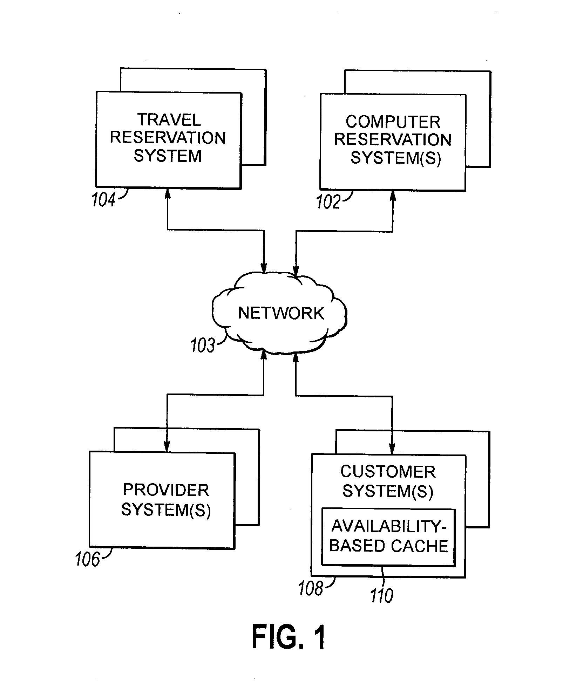

With reference to FIG. 1, this figure provides a block diagram illustrating one or more systems consistent with embodiments of the invention. A computer system 102 may be implemented as one or more servers. The computer system 102 may be connected to a communication network 103, where the communication network 103 may comprise the Internet, a local area network (LAN), a wide area network (WAN), a cellular voice/data network, one or more high speed bus connections, and/or other such types of communication networks. One or more servers for one or more travel reservation systems 104 may be connected to the communication network 103, such that availability traffic, sale traffic, and/or other such relevant data can be routed and communicated to the computer system 102. One or more servers for one or more provider systems 106 may be connected to the communication network 103, such that inventory traffic and/or other such relevant data can be routed and communicated to the computer system 102. One or more servers for one or more customer systems 108 may be connected to the communication network 103. Each customer system 108 may be controlled by or under the control of a travel merchant, such as an on-line travel agent or an airline. A reservation agent may interface with each travel reservation system 104 or each customer system 108 in a reservation session to provide data for a booking request. Each customer system 108 may comprise an external availability-based cache 110 that stores travel solutions for responding to search requests from travelers interfacing with the customer system 108. Each availability-based cache 110 is external to the computer system 102.

While the computer system 102, the travel reservation system 104, and the provider system 106 are described herein as distinct entities, the embodiments of the invention are not so limited. In some embodiments, various hardware, software components, and/or sequences of operations described with respect to the computer system 102, the travel reservation system 104, and/or the provider system 106 may be implemented on the computer system 102, the travel reservation system 104, and/or the provider system 106. Furthermore, as will be appreciated, in some embodiments the computer system 102, the travel reservation system 104, and/or the provider system 106 may be components of a GDS.

While the provider system 106 and the customer system 108 are described herein as distinct entities, the invention is not so limited. In some embodiments, various hardware, software components, and/or sequences of operations described with respect to the provider system 106 and/or the customer system 108 may be implemented on the provider system 106 and/or the customer system 108.

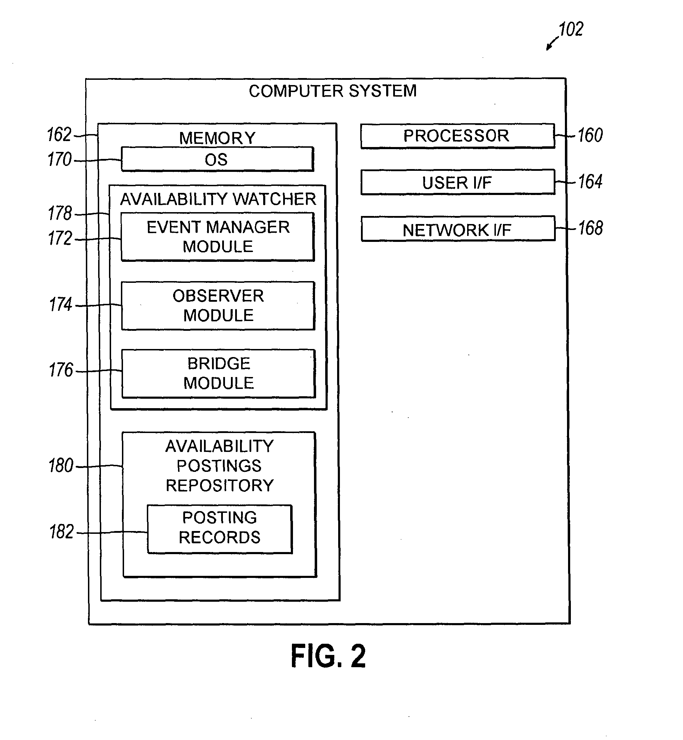

Turning now to FIG. 2, this figure provides a block diagram that illustrates the components of the one or more servers of the computer system 102. The computer system 102 includes at least one processor 160 including at least one hardware-based microprocessor and a memory 162 coupled to the at least one processor 160. The memory 162 may represent the random access memory (RAM) devices comprising the main storage of computer system 102, as well as any supplemental levels of memory, e.g., cache memories, non-volatile or backup memories (e.g., programmable or flash memories), read-only memories, etc. In addition, memory 162 may be considered to include memory storage physically located elsewhere in the computer system 102, e.g., any cache memory in a microprocessor, as well as any storage capacity used as a virtual memory, e.g., as stored on a mass storage device or on another computer coupled to the computer system 102.

For interface with a user or operator, the computer system 102 may include a user interface 164 incorporating one or more user input/output devices, e.g., a keyboard, a pointing device, a display, a printer, etc. Otherwise, input may be received via another computer or terminal (e.g., the customer system 108, the provider system 106, and/or the travel reservation system 104) over a network interface 168 coupled to the communication network 103. The computer system 102 also may be in communication with one or more mass storage devices, which may be, for example, internal hard disk storage devices, external hard disk storage devices, external databases, storage area network devices, etc.

The computer system 102 typically operates under the control of an operating system 170 and executes or otherwise relies upon various computer software applications, components, programs, objects, modules, engines, data structures, etc., including for example, an event manager module 172, an observer module 174, and a bridge module 176 that collectively comprise availability watcher software 178. The operating system 170 manages the hardware resources of the computer system 102 and provides common services for computer programs executing on the computer system 102. In general, the event manager module 172 may be configured to receive and aggregate specific and relevant events that can influence availability changes. Events are considered specific because each is selected from among schedule, inventory, and distribution events. Events are considered relevant if a major impact is generated on flight availability. The event manager module 172 may receive availability data and sale data from the travel reservation system 104 and inventory traffic from the provider system 106, and the event manager module 172 may interface with the observer module 174.

The observer module 174 may be generally configured to watch given travel domains, such as flight domains in the representative embodiment, and to determine watched flight domains that are affected by events arriving from the event manager module 172. The flight domain may comprise a set of flights provided by the customer and may include travel solutions, flight-dates, and/or classes. The flight domain may be limited to a particular market (e.g., flights departing from or arriving in France), a particular departure or arrival location (e.g., Paris Charles de Gaulle Airport), a class further restricting a particular market or location (e.g., class C for flights departing from or arriving in France), etc. In this case, the event details received by the observer module 174 are communicated to the bridge module 176. The observer module 174 implements an additional offline service to initialize and set up each watched flight domain and to prospectively modify each watched flight domain.

The bridge module 176 is generally configured to provide a link to the customer system 108 with respect to flight domains that are impacted by an event and for triggering notifications. Based on the details provided by the observer module 174 on a class/flight status change, the bridge module 176 may retrieve one or more flight domains that are specifically impacted and send one or more notifications to an external availability-based cache system of one or more of the customer systems 108. Following receipt of such a notification, the customer system may remove the travel solutions, may designate the travel solutions for recalculation, may assign recalculation priorities, etc. When a new flight domain comes from one of the customer systems 108, the bridge module 176 can also trigger new watch tasks to the observer module 174.

Moreover, various applications, components, programs, objects, modules, etc. may also execute on one or more processors in another computer coupled to the computer system 102 via the communication network 103, e.g., in a distributed or client-server computing environment, whereby the processing required to implement the functions of a computer program may be allocated to multiple computers over a network. For example, some of the functionality described herein as being incorporated into the computer system 102 may be implemented in one or more servers.

The memory 162 may generally store one or more data structures including, for example, an availability postings repository 180. The availability postings repository 180 may comprise a database that includes data and supporting data structures that store and organize the data. In particular, the availability postings repository 180 may contain records 182 that correspond to all flights for each customer and is updated with requested polled flight dates and availability statuses. The availability postings repository 180 may be arranged with any database organization and/or structure including, but not limited to, a relational database, a hierarchical database, a network database, and/or combinations thereof. A database management system in the form of a computer software application executing as instructions on a processing unit of the computer system 102 is used, in response to a query, to access the information or data stored in the records 182 of the availability postings repository 180. In one embodiment, the availability posting repository 180 may comprise a database that uses open-source relational database management system and that runs as a server providing multi-user access to multiple databases. The keys are travel segment-dates in representative form of flight-dates. Each flight-date is a combination of a flight and a date and refers to a single instance of a flight operating on a given day of the year. The content of the availability postings repository 180 is a set of availability values or postings of availability stored depending on the market and/or the context (e.g., directonline-interline, origin and destination, list of connecting flights, originator of the request). For availability postings relating to a low cost carrier, the price of the travel solutions may also be available in the corresponding postings stored by the availability posting repository 180.

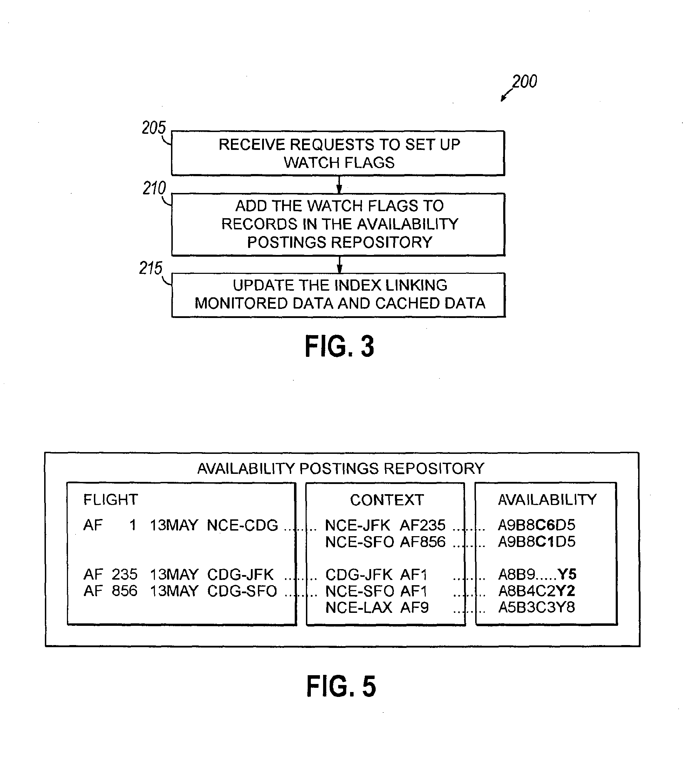

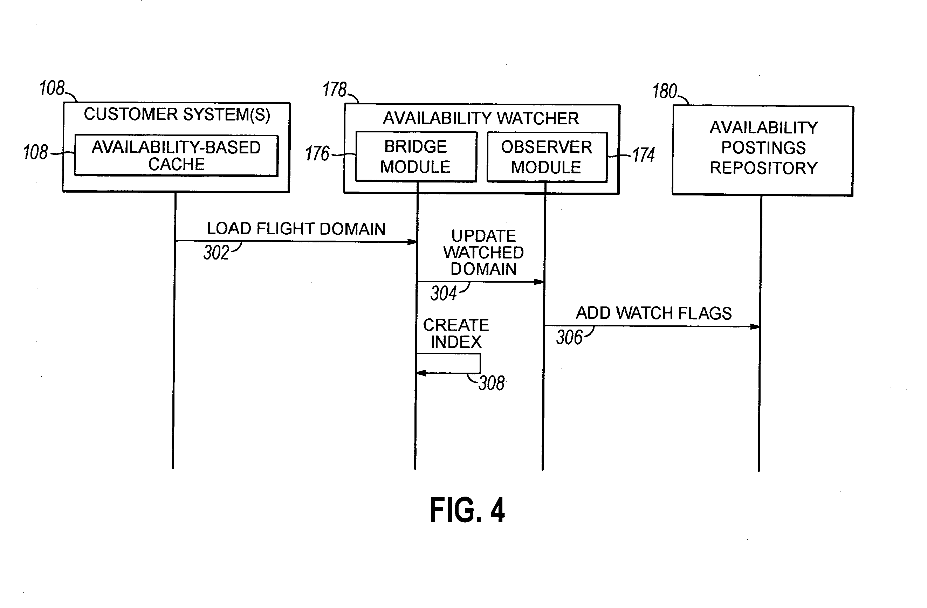

With reference to FIGS. 3, 4, an initialization process is performed by the availability watcher software 178 executing on the computer system 102. FIG. 3 provides a flowchart 200 and FIG. 4 provides a sequence diagram 300 that illustrate sequential operations that may be performed by the computer system 102 of FIG. 2 consistent with embodiments of the invention to perform the initialization process that sets up the monitoring at the computer system 102 for travel solutions/flight-date/classes contained in the external availability-based cache 110 of each customer system 108. The initial population of travel solutions in each external availability-based cache 110 may originate from complete calculations of travel solutions obtained by the associated customer system 108 from a global distribution system. The initial population of travel solutions may be computed with standard availability calculations and may be supplied from the global distribution system to each customer system 108 for storage in the external availability-based cache 110.

The initial step of the initialization process is to receive a request from one of the customer systems 108 to set up one or more watch flags (block 205). The computer system 102 may receive a request in the form of a message 302 from customer system 108 to set up one or more watch flags relating to one or more travel solutions in its external availability-based cache 110. Each watch flag request may be directed to a flight-date to be monitored or watched by the computer system 102 and may include data such as flights, travel solutions, classes, etc. A request received from the customer system 108 may include data representing multiple flight-dates for a flight domain (e.g., a specific market). The received data, which is exclusive to each customer and which may be received in a batch, is loaded into the bridge module 176 of the availability watcher software 178 executing on the computer system 102. The data communicated to the computer system 102 may be either pulled from or pushed by each customer system 108.

The bridge module 176 communicates a message 304 to the observer module 174 with data from the data for use in updating the watched flight domain. The observer module 174 adds watch flags in the availability postings repository 180 for monitoring with a message 306 communicated to the availability postings repository 180 (block 210). The implementation of the storage of the watch flags is built on the availability postings repository 180, which has a segmentation that is specific to the flights and/or connections of the travel solutions in the watched flight domain. The availability postings for a flight-date can be stored in the availability postings repository 180 with a context depending on the flights with which the flight-date is connected. For example, each watch flag in the availability postings repository 180 may be directed to a single class of a flight-date. Alternatively, each watch flag in the availability postings repository 180 may be direct to a specific subset of classes of a flight-date or to all classes of a flight-date.

An example of watch flags being added by the observer module 174 to the availability postings repository 180 is provided in FIG. 5. In FIG. 5, a watch flag is added to Class C of the flight-date of AF1/May 13 in multiple contexts. One context is that a watch flag is added to Class Y of the flight-date of AF235/May 13 in a single context and as a connection for AF 1. Another context is that a watch flag is added to Class Y of the flight-date of AF856/May 13 and as a connection for AF1. The number following the class in each instance indicates a number of available seats for the respective class. A watch flag is absent for the flight-date of AF856/May 13 that is a connection for AF9.

With renewed reference to FIGS. 3, 4 and as a subsequent step of the initialization process, the availability watcher software 178 executing on the computer system 102 updates an index to link the monitoring of events to the specific content of each external availability-based cache 110 (block 215). The bridge module 176 creates and/or updates an index that implements links between the monitored data marked with the watch flags in the availability postings repository 180 and the content of the external availability-based cache 110 of the customer system 108 (message 308). For example, if each watch flag in the availability postings repository 180 is directed to a single class of a flight-date, the observer module 174 establishes a link between the single class on that flight-date and a specific travel solution of the external availability-based cache 110 that is subsequently watched for the occurrence of availability-impacting events. The updates made by the bridge module 176 to the index may include revisions to existing links or the deletion of existing links. The index is used by the availability watcher software 178 to allow the triggering of a notification for invalidation of specific data (i.e., travel solution availability).

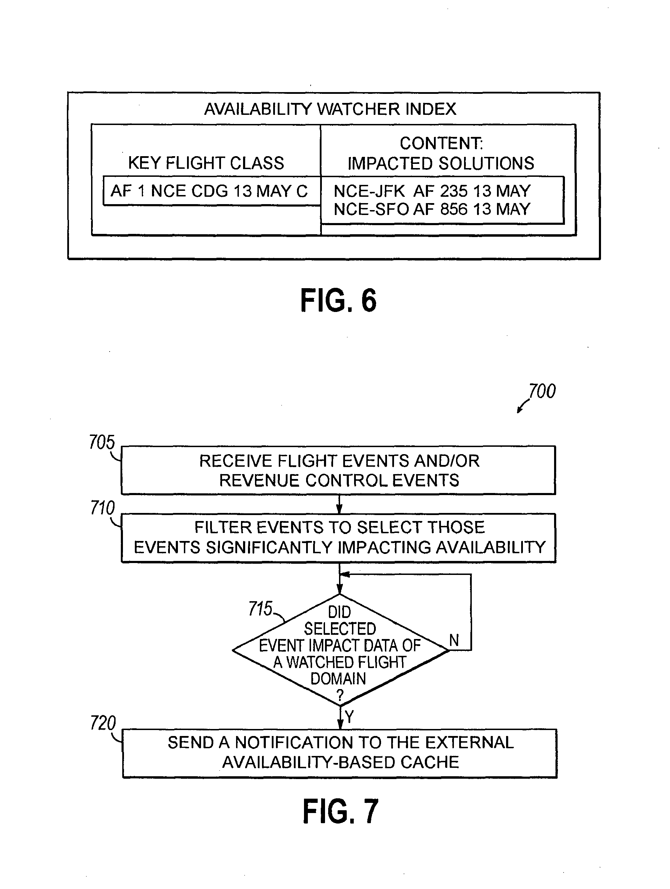

An example of the index is provided in FIG. 6. The index may comprise a key, which may be a flight class key, that allows the availability watcher software 178 to efficiently identify the links between classes of flight-dates and the travel solutions being monitored. The links can be identified without querying the external availability-based cache 110 and before querying the availability postings repository 180. The key is comprised of one or more data attributes of the table holding the availability postings of the availability postings repository 180. The initialization process places watch flags (e.g., an indicator or a Boolean value on a class) in the availability postings repository 180. The initialization process also provides a data access path between the index and the records in the database table of the availability postings repository 180. The links define connections between the travel solutions in the watched domain and the flight-dates tagged with the watch flags in the availability postings repository 180. Each flight-date may be associated with a single travel solution or, alternatively, with multiple travel solutions in the index.

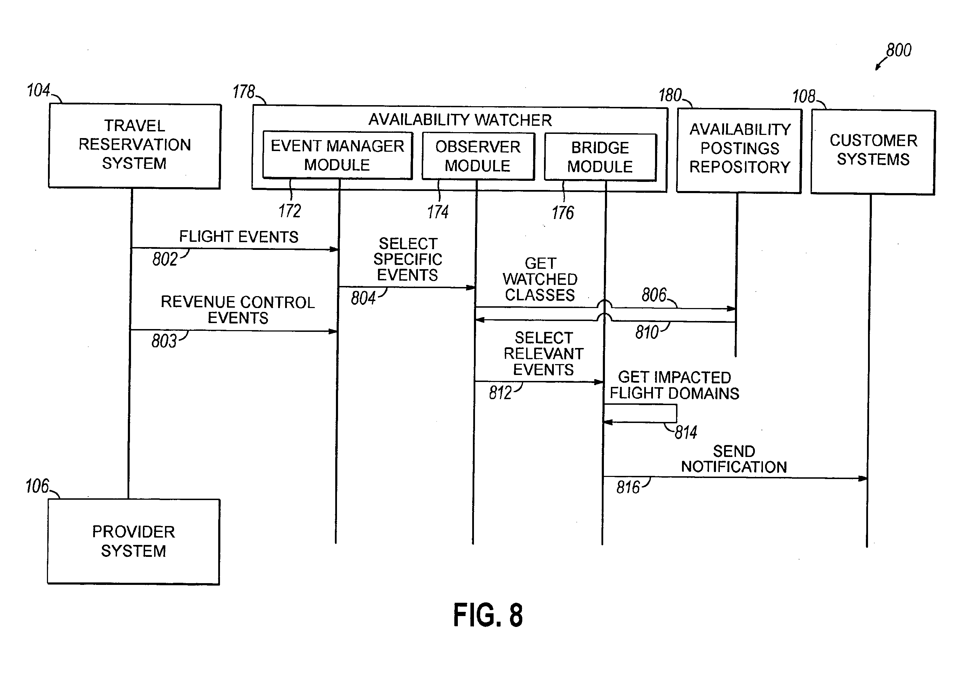

With reference to FIGS. 7, 8, the availability watcher software 178 executing on the computer system 102 provides data change alerts or notifications to the external availability-based cache 110 of each customer system 108. FIG. 7 provides a flowchart 700 and FIG. 8 provides a sequence diagram 800 that illustrate sequential operations that may be performed by the computer system 102 of FIG. 2 to monitor for events that impact the travel solutions/flight-date/classes contained in the external availability-based cache 110 of each customer system 108 and to provide notifications to the customer systems 108 consistent with embodiments of the invention that. Generally, the availability watcher software 178 is configured to notify the external availability-based cache 110 of each customer system 108 of any change impacting the quality of its cached data, which may be referred to as a level of trust or trust rank. In particular, the availability watcher software 178 identifies cached data that may be invalid in each availability-based cache 110 based upon relevant events impacting flight availability and/or revenue controls.

The event manager module 172 may receive feeds containing events from one or more travel reservation systems 104 and/or one or more provider systems 106 (block 705). The events may be flight events communicated in a message 802 to the computer system 102 and/or may be revenue control events communicated in a message 803 to the computer system 102. Generally, the received events are used by the availability watcher software 178 to determine whether each travel solution remains valid in one or more of the availability-based caches 110 in view of the event impact. The travel reservation system 104 and/or the provider system 106 may provide events that update an inventory, an availability status, or a flight schedule. The events may also comprise sales feeds that impact flights availability. The feeds supplying the events to the event manager module 172 may have various different origins.

One type of feed for flight events may be received from the travel reservation system 104 and/or the provider system 106 in an interactive process as a reply to a polling query by the computer system 102. The flight events may reflect changes to the availability of a flight or the availability of a class of a flight, and may be derived from the inventory system that is maintained at the travel reservation system 104 on behalf of the provider system 106 or that is maintained at the provider system 106. To provide the feed of events by polling, the inventory system at the provider system 106 may need to support interactive dynamic availability. The provider system 106 may provide availability postings for each class of each flight in the context of travel solutions. The values for the availability postings arriving from the provider system 106 are compared with the values of the availability postings stored in the availability postings repository 180. The comparison detects value changes to determine whether or not a value change is relevant. Additional information may be considered before proceeding with the selection of impacted travel solutions. For example, a change in the value of an availability posting must also occur on a flight domain that is being watched for the specific customer from which the data is received in reply to the polling query.

Another type of feed for flight events may be an availability status event feed, which is also received from the travel reservation system 104 and/or the provider system 106. The flight events may reflect changes to the availability of a flight or the availability of a class of a flight, and may be derived from the inventory system that is maintained at the travel reservation system 104 on behalf of the provider system 106 or that is maintained at the provider system 106. In contrast to replies from polling queries, availability status event feeds are an offline approach for updating the values of the availability postings. The availability postings, which indicate whether a class for a flight-date is open or closed for sale, are at a segment level and not at travel context level. Also in contrast to replies to polling queries, an availability status event fee lacks a domain connection and lacks any type of context logic.

Another type of feed for flight events may be flight schedule changes that are received from the provider system 106 or from the travel reservation system 104 operating on behalf of the provider system 106. Schedule events in a changed flight schedule can impact flight availability because booking classes can be added, booking classes can be cancelled, flights can be added, flights can be cancelled, etc. For changes in a list of classes, this type of feed may be incorporated into the data received in an availability status event feed. As an example, a full schedule cancellation may cancel multiple flight-dates for a specific flight from an origin to a destination. In this example, all travel solutions impacted by these flight-dates would be eventually be retrieved for possible invalidation by the availability watcher software 178 executing on the computer system 102 and, if invalid, sending a notification to the the customer system 108 for updating and/or refreshing the data in its availability-based cache 110.

Yet another type of feed for events relating to flight inventory may be provided by the travel reservation system 104 in the form of successful sales for committed bookings and/or rejected sales for rejected booking attempts. For a rejected sale on a specific flight, the monitored travel solutions including the specific flight would be considered for possible invalidation contingent upon belonging to the same market as the watched flight domain. For a successful sale, background processes can correlate each sell transaction with a corresponding availability reply, which would allow alerting for the closure of a class before receipt of an availability update. Specifically, the correlation may be provided from a comparison of between the last number of seats that has been sold and the remaining availability on the same class. A feed for sales from a provider system 106 operating as a low cost carrier may further include an exact price of a sold travel solution associated with a successful booking. The presence of the price permits the price provided at availability time to be compared with the current price, which could therefore be eventually sent as a price update to the external availability-based cache 110.

Another type of feed would involve a feed of revenue controls. Relevant revenue controls may include, but are not limited to, bid prices and yields. A bid price is a net value for an incremental seat on a particular flight/leg/cabin in the airline network. The bid price is the marginal value of a given flight/leg/cabin, also referred to as minimum acceptable net revenue, hurdle rate, shadow price, displacement cost, or dual cost. The bid price is the minimum revenue at which an airline wishes to sell the next seat. A yield is defined for each class and origin and destination (O&D). The yield estimates how much revenue a provider (e.g., a carrier or an airline) receives from a sale on the associated O&D/class.

The event manager module 172 is configured to filter the arriving events to detect and select those events that are specific and relevant events based on business rules (block 710). Events that are not specific and relevant are filtered out. Hence, the event manager module 172 receives all flight events and/or all revenue control events as input, and outputs only specific and relevant flight events and/or revenue control events. For each event, the event manager module 172 evaluates specificity and relevancy based upon one or more criteria. The logic implemented by the event manager module 172 may be primarily based on the selection of the feeds and on the availability change that the event itself can generate. As examples, the standard for considering an event to be relevant and specific may be an availability value dropping close to zero (e.g., a threshold of two seats remaining in a booking class), a change in flight status on a flight-date, removal of a class from a flight-date, addition of a new class to a flight-date, rejection of a sale transaction for a flight-date, reopening of a previously-closed class of a flight-date, addition of a new class to a flight-date, a price change for a flight-date, a change in revenue controls for a flight-date, etc.

The event manager module 172 communicates the events considered relevant and specific in a message 804 as input to the observer module 174. The observer module 174 selects a subset of the events communicated to it by the event manager module 172 that impact the watched flight domain for each particular customer (block 715). If an event impacts the watched flight-dates and classes, then the observer module 174 retrieves the monitored travel solutions that are impacted by the event. To do so, the observer module 174 sends a message 806 to the availability postings repository 180 to retrieve the watches classes and receives a reply from the availability postings repository 180 in a message 810. The output from the observer module 174 is data on the watched flight domain that is impacted by a selected event and that requires action in the external availability-based cache 110. Data for watched flights and classes that are selected as being impacted is communicated in a message 812 as selected events from the observer module 174 to the bridge module 176.

Each customer may select a notification level at which the event is determined to the relevant and specific to the travel solutions maintained in its availability-based cache 110. For example, a number of classes may be watched per flight by the observer module 174 and events that are relevant and specific to the watched classes are monitored. One notification level may be at a flight class level. Whenever a flight class is closed or a given number of seats remain in a class, each corresponding travel solution is indicated as invalid in the notification communicated from the computer system 102 to the customer system 108. Another notification level may be at a full flight level. If all classes of a flight are being watched and the event indicates that all classes are closed, then each corresponding travel solution is indicated as invalid in the notification communicated from the computer system 102 to the customer system 108. Another notification level may be at a partial flight level. If all classes of a flight are being watched and the event indicates that a given percentage of the classes are closed or nearly closed, then each corresponding travel solution is indicated as critical in the notification communicated from the computer system 102 to the customer system 108. Yet another notification level may be flight class re-opening. If a monitored class changes from being closed to available, then each corresponding travel solution is indicated as available in the notification communicated from the computer system 102 to the customer system 108 along with a re-computation hint. Yet another notification level may be a low cost carrier price jump. Because the index may include prices associated with travel solutions with flight-dates for low cost carriers, notifications can be triggered based upon significant price changes (i.e., a price change above a given monetary threshold).

The bridge module 176 is configured to link the watched flight domain with the external data of the availability-based cache 110 and is also configured to trigger the communication of notifications that inform the customer system 108 of an impacted travel solution. The bridge module 176 is configured to retrieve the external system domain that is impacted by the data communicated from the observer module 174. The bridge module 176 relies on the index that links the values (flight, date, class) in each record in the availability postings repository 180 to a list of travel solutions. For each of these impacted travel solutions, notifications are sent to the owner of the availability based cache. The input to the bridge module 176 from the observer module 174 may comprise data representing the relevant events on the monitored flights and the output from the bridge module 176 may comprise data representing the impacted travel solutions.

Upon receiving the notifications from the bridge module 176 that one or more cached travel solutions are invalid, the customer system 108 updates and/or refreshes the data in its availability-based cache 110. In particular, the customer system 108 may elect to respond to the invalidation notifications by removing impacted travel solutions from the availability-based cache 110, processing impacted travel solution for recalculation, assigning recalculation priorities for impacted travel solutions, etc. The resulting data update at the customer system 108 increases the likelihood that a travel solution retrieved from its availability-based cache 110 for display to a traveler is actually available and can actually be booked by the traveler at sell time. As such, the reliability of availability-based data in the availability-based cache 110 is improved.

In alternative embodiments, the procedure described for watching availability-based data maintained in an external cache may be applied to modes of transportation, other than aviation, characterized by pre-determined routes each having one or more travel segments. For example, the principles of the embodiments of the invention may be applied to ground transportation or land transport, such as transportation by rail (i.e., passenger train travel), transportation by passenger buses, etc. In this instance, the keys may comprise travel segment-dates. Each travel segment-date is a combination of a rail segment and a date, or a combination of a bus segment and a date, and refers to one instance of a rail segment or a bus segment operating on a given day of the year. Similar to flight-dates representing travel segments on a given date between an origin and a destination, each rail segment or bus segment has an origin and a destination. Similar to a flight domain acting as a travel domain, the travel domain for bus or rail transportation may comprise a schedule or set of rail segments or bus segments provided by the customer.

In general, the routines executed to implement the embodiments of the invention, whether implemented as part of an operating system or a specific application, component, program, object, module or sequence of operations and/or instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications, modules, sequences of operations, and/or components described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method of watching availability-based data maintained in an external cache, the method comprising:
receiving, at a computer system, a plurality of events each changing a parameter for a first plurality of travel segment-dates;
comparing, with at least one processor of the computer system, each event with a standard establishing a threshold for the parameter;
filtering the events to remove each event that fails to meet the standard and to produce a filtered set of events comprising each event that meets the standard;
referencing an index at the computer system correlating a second plurality of travel segment-dates in a travel domain with a plurality of travel solutions in the availability-based data to determine one or more of the second plurality of travel segment-dates in the index to which the events in the filtered set of events are applicable;
referencing the index to determine each travel solution correlated with the one or more of the second plurality of travel segment-dates; and
sending a notification from the computer system to the external cache to refresh the availability-based data to reflect each travel solution correlated with the one or more of the second plurality of travel segment-dates.

2. The method of claim 1 wherein the notification comprises an instruction indicating that at least one class for at least one of the travel solutions in the availability-based data is closed.

3. The method of claim 1 wherein the notification comprises an instruction indicating that all classes for at least one of the travel solutions in the availability-based data are closed.

4. The method of any of the preceding claims wherein the first plurality of travel-segment dates comprises a plurality of flight-dates, and the standard is a change in availability value for a class of a flight-date, a change in flight status on a flight-date, removal of a class from a flight-date, rejection of a sale transaction for a flight-date, reopening of a previously-closed class of a flight-date, addition of a new class to a flight-date, a change in revenue controls for a flight-date, a price change for a flight-date, or a combination thereof.

5. The method of any of the preceding claims wherein the first plurality of travel-segment dates comprises a plurality of flight-dates, the parameter is an availability of a class on a flight-date, and the events are selected from the group consisting of a plurality of accepted bookings, a plurality of rejected booking attempts, reservation system events, booking cancellations, or a combination thereof.

6. The method of any of the preceding claims wherein the first plurality of travel-segment dates comprises a plurality of flight-dates, the parameter is a price on each flight-date, and the events are price changes.

7. The method of any of the preceding claims wherein the parameter is a bid price or a yield, and the events are revenue controls.

8. The method of any of the preceding claims wherein the second plurality of travel-segment dates comprises a plurality of flight-dates, and further comprising:
adding a watch flag to each record containing one of the flight-dates in an availability postings repository at the computer system.

9. The method of claim 8 further comprising:
creating, at the computer system, the index correlating the flight-dates in the travel domain with the travel solutions in the availability-based data at the external cache.

10. A computer program product comprising:
a non-transitory computer readable storage medium; and
program code stored on the computer readable storage medium and configured upon execution by at least one processor to perform the method of any of claims 1-9.

11. A computer system for watching availability-based data maintained in an external cache, the computer system comprising:
at least one processor; and
program code configured to be executed by the at least one processor and upon execution to cause the at least one processor to:
receive a plurality of events each changing a parameter for a first plurality of travel segment-dates;
compare each event with a standard establishing a threshold for the parameter;
filter the events to remove each event that fails to meet the standard and to produce a filtered set of events comprising each event that meets the standard;
reference an index correlating a second plurality of travel segment-dates in a travel domain with a plurality of travel solutions in the availability-based data to determine one or more of the second plurality of travel segment-dates in the index to which the events in the filtered set of events are applicable;
reference the index to determine each travel solution correlated with the one or more of the second plurality of travel segment-dates; and
send a notification to the external cache to refresh the availability-based data to reflect each travel solution correlated with the one or more of the second plurality of travel segment-dates.

12. The computer system of claim 11 wherein the first plurality of travel-segment dates comprises a plurality of flight-dates, and the standard is a change in availability value for a class of a flight-date, a change in flight status on a flight-date, removal of a class from a flight-date, rejection of a sale transaction for a flight-date, reopening of a previously-closed class of a flight-date, addition of a new class to a flight-date, a change in revenue controls for a flight-date, a price change for a flight-date, or a combination thereof

13. The computer system of claim 11 or claim 12 wherein the first plurality of travel-segment dates comprises a plurality of flight-dates, the parameter is an availability of a class on a flight-date, and the events are selected from the group consisting of a plurality of accepted bookings, a plurality of rejected booking attempts, reservation system events, booking cancellations, or a combination thereof.

14. The computer system of any of claims 11 to 13 wherein the second plurality of travel-segment dates comprises a plurality of flight-dates, and the program code is further configured upon execution to cause the at least one processor to:
add a watch flag for each flight-date to a record for the flight-date in an availability postings repository at the computer system; and
create the index correlating the flight-dates in the travel domain with the travel solutions in the availability-based data at the external cache.

15. The computer system of any of claims 11 to 13 wherein the second plurality of travel-segment dates comprises a plurality of flight-dates, and the program code is further configured upon execution to cause the at least one processor to:
add a watch flag to each record containing one of the flight-dates in an availability postings repository.
